Europäisches Patentamt

European Patent Office

Office européen des brevets

(19)

(11) Publication number: **0 146 407**
A2

(12)

# EUROPEAN PATENT APPLICATION

(21) Application number: **84308878.2**

(22) Date of filing: **17.12.84**

(51) Int. Cl.⁴: **B 01 D 46/42,** B 01 D 46/00,
B 01 D 51/10

---

(30) Priority: **17.12.83 GB 8333703**

(71) Applicant: **TILGHMAN WHEELABRATOR LIMITED, P.O. Box 60 Broadheath, Altrincham Cheshire, WA14 5EP (GB)**

(43) Date of publication of application: **26.06.85 Bulletin 85/26**

(72) Inventor: **Millard, Robin, Greenways, Yew Tree Way, Prestbury (GB)**

(74) Representative: **Massey, Alexander et al, MARKS & CLERK Scottish Life House Bridge Street, Manchester, M3 3DP (GB)**

(84) Designated Contracting States: **DE GB**

---

(54) **Apparatus for and a method of processing particulate gas and fumes.**

(57) An apparatus for processing gas from a coke oven comprises a heat exchanger through which the gas passes prior to entry to a fabric filter plant at a reduced temperature in excess of 130°C, preferably at 150°C or more, and a precoat supply system adapted initially to feed a precoat of at least limestone/dolomite or coke or admixtures thereof for the filter fabric into the heat exchanger gas inlet and/or the fabric filter plant and thereafter the said precoat mixed with particulate recovered from the heat exchanger and fabric filter.

EP 0 146 407 A2

1.

APPARATUS FOR AND A METHOD OF
PROCESSING PARTICULATE, GAS AND FUMES

This invention relates to apparatus for and a method of processing particulate, gas and fumes emitted from coke ovens during coke manufacture.

By "processing" is meant the actions of control, removal and filtration.

In the manufacture of coke the raw material, namely coal in any of its forms, is charged into an oven or cell, generally one of a number forming a battery. The oven is a long, narrow cell with an airtight door at each end. With the airtight doors closed the cell is charged with ground coal through the top until full. Gas is then burned in flues which pass between the cells raising the sealed off coal to a temperature of about $1300^{\circ}C$ for about 18 hours. The gas, including the by-products, is led off leaving a white hot mass of coke behind in the oven. At the end of the coking period the door at each end of the cell is removed and a powerful ram thrusts the coke out into a special car. The action of the ram thrusting the coke out is referred to as "coke pushing".

The "coke pushing" releases very large amounts of hot gas, fumes, particulate and in many instances unburnt or partially unburnt hydrocarbons (tars) (hereinafter for convenience all simply embraced by

2.

the reference "gas") into the atmosphere.

This gas has, up until now, been drawn through an electrostatic precipitator, Venturi scrubber or a fabric filter. In the case of a fabric filter the amount of cooling presented to the gas generally by way of dilution air has resulted in the temperature at the fabric filter being limited to not more than $130^{\circ}C$ so that the filter media used is a polyester material or others having similar filtration properties at this temperature or below.

The presence of tars in the gas present a problem in the use of fabric filters since if they impinge on the fabric they cool, accumulate and eventually render the filter plant virtually inoperable by preventing the passage of air through the cloth. This problem can be reduced by coating the filter face side of the fabric at stages, or intermittently/continuously, with a ground or particulate material on which the tar will impinge (instead of the cloth). The tar and the coating (known as "precoat") can be removed at intervals and fresh precoat material introduced.

It is an object of the present invention to provide apparatus and a method for processing gas from coke ovens at higher temperatures than hitherto and with beneficial heat exchange characteristics.

According to the present invention there is provided apparatus for processing gas from a coke

3.

oven, the apparatus comprising a heat exchanger through which the gas passes prior to entry to a fabric filter plant at a reduced temperature in excess of $130^{o}$C, and a precoat supply system adapted initially to feed a limestone/dolomite precoat for the filter fabric into the heat exchanger gas inlet and/or the fabric filter plant and thereafter a precoat mixture of limestone/dolomite and particulate recovered from the heat exchanger and fabric filter.

Preferably, the gas enters the fabric filter plant at $150^{o}$C or more.

Also according to the present invention there is provided a method of processing gas from a coke oven, the method comprising the steps of feeding the gas through a heat exchanger into a fabric filter plant at a reduced temperature in excess of $130^{o}$C, preferably $150^{o}$C or more, and precoating the filter fabric with a limestone/dolomite precoat initially and thereafter with a precoat mixture of limestone/dolomite and particulate recovered from the heat exchanger and fabric filter plant.

It is to be understood that limestone/dolomite is added to the precoat mixture if required.

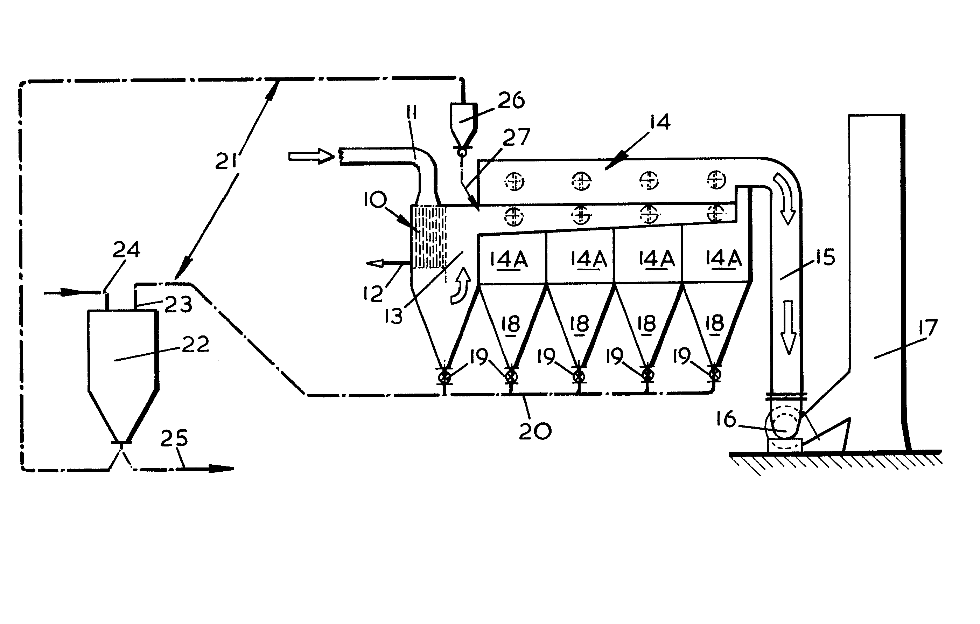

An embodiment of the present invention will now be described, by way of example, with reference to the accompanying drawing which diagrammatically illustrates the gas processing apparatus.

4.

The apparatus comprises a heat exchanger 10 of any convenient construction whereof the main gas inlet flue 11 is connected to the hood of a coke oven (not shown).

This heat exchanger 10 has a take-off 12 for recovered heat and a pre-separator 13 is interposed between it and the inlet to a fabric filter plant 14 coupled to the heat exchanger 10.

The filtered gas outlet flue from the plant 14 is indicated at 15, the filtered gas with diluting air being blow by a fan 16 up a chimney 17 into atmosphere.

The heat exchanger 10 and individual fabric filter units 14A of the filter plant 14 have particulate collection hoppers 18 with dumping valves 19 openable to dump particulate into a collection system 20.

The apparatus includes a pre-coat supply system 21 which is coupled to the heat exchanger/ fabric filter plant assembly 10, 14. This system 21 comprises a storage silo 22 for the pre-coat for the filter fabric, which pre-coat is limestone/ dolomite.

The particulate collection system 20 is connected to the silo at 23, there being a limestone/ dolomite supply pipe connected to the silo at 24 and at a particulate disposal pipe 25 at the silo bottom.

5.

The precoat supply system 21 feeds precoat from the bottom of the silo 22 into a precoat bin 26 from which precoat can be fed into the fabric filter plant 14 as indicated at 27 or to individual sections of the filter plant. The precoat may alternatively or additionally be fed into the main gas flue 11 of the heat exchanger 10.

With the present invention the coke oven gas, with its included tars is filtered at temperatures in excess of $130^{o}C$, say, for example $150^{o}C$.

In use, the hot gases from the coke oven are passed through the heat exchanger 10 which removes the desired waste heat from the gas and allows it to flow to the fabric filter plant 14 at a temperature of, say, $150^{o}C$. Controls permit heat stored in the heat exchanger 10 to be released, during an inactive (non-pushing) period, into the fabric filter plant 14 thus keeping it at an optimum temperature. Further, surplus heat is removed from the heat exchanger 10 at take-off 12 to provide heat for other requirements e.g. process heating, works and office heating, etc. The heat exchanger 10 may also remove incandescent particles which would be likely to pass to the fabric filter and be damaging to the filter media.

With the pre-coating operation, limestone/dolomite is introduced into the apparatus either into the main gas flue 11 or the fabric filter plant 14, or a combination of both. The precoat is removed

6.

from the fabric filters together with the collected particulate and re-used if required as a precoat until the tars content make it unsuitable for use. Additional limestone/dolomite may be added as required.

The precoating introduced onto the filter fabric, and continuous or intermittent injection thereof during subsequent running of the apparatus protects the fabric filter tubes from the build up of tarry deposits on the fabric, assists in the release of collected particulate from the filter fabric, provides protection against the acid within the gas stream by absorbing it (or some of it) thus preventing it condensing on the fabric filter tubes and the filter plant and reducing therefore the amount of sulphur dioxide being discharged into the atmosphere.

The fabric filter required to operate at above this temperature of 150°C may be designed to be of the well-known reverse or pulse jet type, the reverse air type or the shaker type, using woven or needle-felt fabric as the filter media.

Compared with existing apparatus used for processing hot gases emitted from coke ovens the apparatus and method according to the present invention have the following advantageous characteristics:-

0146407

1.  The use of a fabric filter operating at temperatures in excess of 150°C.

2.  Less power is used.

3.  The use of a heat exchanger enables: heat to be removed and put to good use in other heating schemes, it assists in keeping the fabric filter and filter plant warm during an "inactive or precoating" period, controls the inlet temperature of the filter plant, and reduces incandescent particles.

4.  Precoating at this temperature uses limestone/dolomite initially and thereafter uses this and the collected particulate wholly or in part, thus saving on cost of raw material. it provides protection for the filter cloth against the build up of tarry deposits on the fabric. It provides protection against acids, sulphur dioxide etc. within the gas stream condensing on the filter tubes and filter plant housing. It provides protection against sulphur dioxide being released to the atmosphere.

It is to be noted that another particularly suitable pre-coat material is coke dust. This may be employed on its own or in admixture with other suitable materials such for example as limestone/dolomite. The coke dust used may be recovered from the process of the present invention.

0146407

- 8 -

CLAIMS:

1. Apparatus for processing gas from a coke oven, the apparatus comprising a heat exchanger through which the gas passes prior to entry to a fabric filter plant at a reduced temperature in excess of 130°C, and a precoat supply system adapted initially to feed a precoat of at least limestone/dolomite or coke or admixtures thereof for the filter fabric into the heat exchanger gas inlet and/or the fabric filter plant and thereafter the said pre-coat mixed with particulate recovered from the heat exchanger and fabric filter.

2. Apparatus as claimed in claim 1 in which the gas enters the fabric filter plant at a temperature of 150° or more.

3. Apparatus as claimed in claim 1 or 2 comprising a pre-separator disposed between a take-off for recovered heat of the heat exchanger and an inlet to the fabric filter plant.

4. Apparatus as claimed in any one of claims 1 to 3, in which the fabric filter plant comprises a plurality of individual fabric filter units, each with a particulate collection hopper having a dumping valve.

5. Apparatus as claimed in claim 4, in which the collection hoppers are connected _via_ their dumping valves to a common collection system.

6. Apparatus as claimed in claim 5, in which the pre-coat supply system comprises a storage silo for the pre-coat, which is at least limestone/dolomite, or coke, or admixtures thereof, the silo being connected to the common collection system and the silo having a supply pipe at its upper end for the delivery of the precoat and a particulate disposal pipe at its bottom.

7. Apparatus as claimed in claim 6, in which the silo is connected to a bin from which pre-coat is fed into the fabric filter plant or selected sections thereof and/or into a main gas flue of the heater exchanger.

8. Apparatus for processing gas from a coke oven, substantially as hereinbefore described with reference to the accompanying drawing.

9. A method of processing gas from a coke oven, the method comprising the steps of feeding the gas through a heat exchanger into a fabric filter plant at a reduced temperature in excess of 130ºC, and precoating the filter fabric with a precoat of at least limestone/dolomite or coke or admixtures thereof initially and thereafter with the said precoat mixed with particulate recovered from the heat exchanger and fabric filter plant.

0146407